(19) Europäisches Patentamt

European Patent Office

Office européen des brevets

(11) **EP 1 026 619 A2**

(12) **EUROPEAN PATENT APPLICATION**

(43) Date of publication:
09.08.2000 Bulletin 2000/32

(51) Int. Cl.7: **G06K 7/10**

(21) Application number: **00300761.4**

(22) Date of filing: **01.02.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **04.02.1999 JP 2755999**

(71) Applicant:
**Matsushita Electronics Corporation
Kadoma-shi, Osaka 571-8501 (JP)**

(72) Inventors:
• **Inoue, Katsushi
Kyoto-shi, Kyoto 615-8084 (JP)**

• **Kobayashi, Keiichi
Mino-shi, Osaka 562-0023 (JP)**
• **Kojima, Yoshihiro
Neyagawa-shi, Osaka 572-0823 (JP)**
• **Kannon, Tetsuya
Mino-shi, Osaka 562-0005 (JP)**

(74) Representative:
**Crawford, Andrew Birkby et al
A.A. Thornton & Co.
235 High Holborn
London WC1V 7LE (GB)**

(54) **Optical information reader and optical information reading system**

(57) By displaying the video signal in the display unit only, the detecting intensity of signal stored actually in the memory (signal storing means) is not known, and it is difficult to adjust the appropriate irradiation illuminance and lens, and it is hence an object to present an optical information reader and an optical information reading system capable of expressing the detecting intensity as waveform in the display unit.

The data of the specified line is picked up (step 11), and transformed into waveform of detecting intensity, and shown in the display unit (step 12).

Fig.1

**Description**

FIELD OF THE INVENTION

The present invention relates to an optical information reader and an optical information reading system for reading barcodes, two-dimensional codes, and other code symbols. The invention may be applied not only in a two-dimensional code reader and a system using the same, but also in a one-dimensional barcode reader, an OCR reader, a hand-held terminal and other portable information terminal for reading information of code symbols optically and a system using the same.

BACKGROUND OF THE INVENTION

Among optical information readers and optical information reading systems, in particular, a two-dimensional code reader using a two-dimensional image sensor as image sensor and a system using the same are described below.

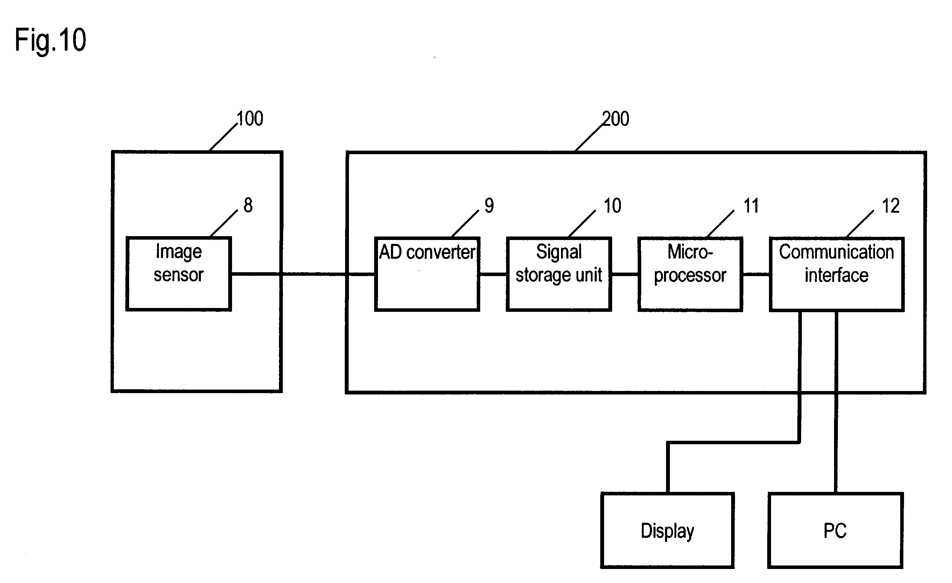

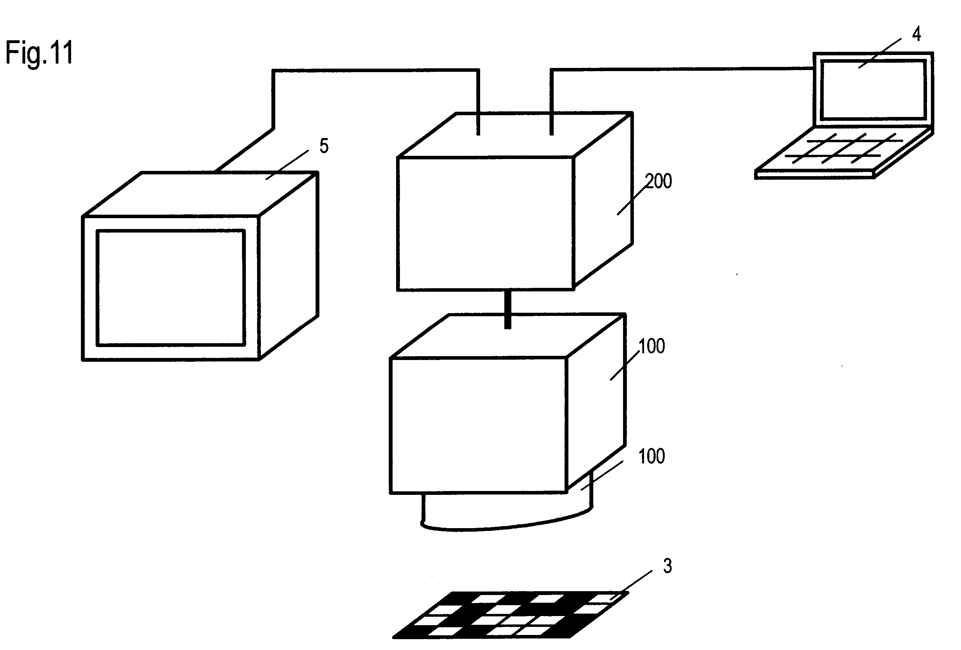

A conventional two-dimensional code reader is shown in a block diagram in Fig. 10. Its appearance is given in Fig. 11. As shown in Fig. 11, the conventional two-dimensional code reader was composed of a commercial video camera 100, and a signal processor 200 for processing the signals of the video camera 100. The video camera 100 is composed mainly of an image sensor 8 and an amplifier (not shown). The video camera 100 converts a reflected light from a code symbol 3 or its periphery into an electric signal, and sends the converted electric signal into the signal processor 200. The signal processor 200 is composed of an AD converter 9, signal storing means 10, a microprocessor 11, and a communication interface 12. The AD converter 9 converts the electric signal from the image sensor 8 of the video camera 100 into a digital signal. The signal storing means 10 stores the signal digitized by the AD converter 9. The microprocessor 11 recognizes the signal stored in the signal storing means 10. The microprocessor 11 transmits the result of the recognition process to a host system such as POS (point of sales) or PC (personal computer) through the communication interface 12.

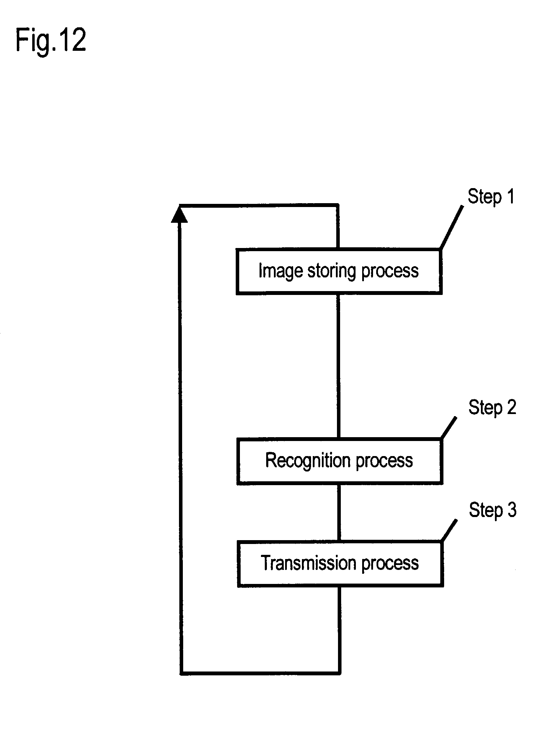

The process flow of this conventional two-dimensional code reader is shown in Fig. 12.

Step 1: Image storing process

The microprocessor 11 processes to store the output signal from the video camera 100 into the signal storing means 10 composed of a memory through the AD converter 9.

Step 2: Recognition process

After all output signals are stored at step 1, the microprocessor 11 recognizes them.

Step 3: Transmission to host

The result recognized at step 2 is transmitted by the microprocessor 11 to the host system such as POS or PC through the communication interface 12.

The conventional optical information reader or optical information reading system also included a two-dimensional code reader of a type capable of displaying the code symbol and its periphery to be read, being photoelectrically converted by the video camera 100, as contrast (image) in the display unit. However, the conventional optical information reader or optical information reading system could not display the magnitude of electric signal (hereinafter called detecting intensity) photoelectrically converted by the video camera 100 as waveform or the like, and hence it was difficult to adjust the quantity of light received by the video camera 100 accurately.

Moreover, many display devices are designed to adjust the own contrast manually or automatically. Therefore, in the conventional optical information reader or optical information reading system, the electric signal photoelectrically converted by the video camera 100 may not be actually displayed in accurate contrast.

Focusing when manufacturing or installing was adjusted by viewing the display image. Such adjustment involved a problem of individual difference due to the individual sense. If set at the irradiation illuminance appropriate for the reading condition at the time of installation, it may be changed due to deterioration of light source in the course of time or effects of external light. Accordingly, in the conventional optical information reader or optical information reading system, it was impossible to obtain the reading condition stably including the optimum irradiation illuminance at the time of reading.

Incidentally, the conventional two-dimensional code reader was composed of two sections as shown in Fig. 11, that is, the video camera and signal processor. The two sections are coupled through signal cables. Such conventional constitution was high in cost and complicated in handling.

## SUMMARY OF THE INVENTION

To solve the above problems, it is hence an object of the invention to present an optical information reader and an optical information reading system capable of:

adjusting the irradiation illuminance and focus easily and accurately to the code symbol when installing and manufacturing, and
maintaining the reading condition including the irradiation illuminance at the time of installation even long after installation.

To achieve the object, the optical information reader of the invention comprises:

a) an image sensor for taking in a reflected light from a code symbol and its periphery and converting into an electric signal,
b) an AD converter for converting the electric signal from the image sensor into a digital signal,
c) signal storing means for storing the signal digitized from the electric signal from the image sensor,
d) a line specifying unit for specifying the line for picking up from the digital signals stored in the signal storing means, and
e) a microprocessor for picking up the signal of at least one line specified by the line specifying unit.

This microprocessor has a function of decoding the signal digitized by the AD converter into the information possessed by the code symbol.
The optical information reader of the invention has all the constituent parts integrated into one body.

## BRIEF DESCRIPTION OF THE DRAWINGS

Fig. 1 is a block diagram of an optical information reader in a first embodiment of the invention.
Fig. 2 is an appearance drawing of the optical information reader in the first embodiment of the invention.
Fig. 3 is a flowchart of the optical reader and system in the first embodiment of the invention.
Fig. 4 is an explanatory diagram of pickup means of the optical reader and system in the first embodiment of the invention.
Fig. 5 is a schematic waveform diagram of data of the optical reader and system in the first embodiment of the invention.
Fig. 6A is a schematic waveform diagram of thin line and thick line of code symbol in the first embodiment of the invention.
Fig. 6B is a schematic waveform diagram of thin line and thick line of code symbol in the first embodiment of the invention, with the focus not adjusted.
Fig. 6C is a schematic waveform diagram of thin line and thick line of code symbol in the first embodiment of the invention, with the focus adjusted.
Fig. 7 is a block diagram of an optical information reader in a second embodiment of the invention.
Fig. 8 is a structural diagram of optical reader and system in a third embodiment of the invention.
Fig. 9 is a flowchart of optical reading system in the third embodiment of the invention.
Fig. 10 is a block diagram of a conventional optical reading system.
Fig. 11 is an appearance diagram of conventional optical information reader.
Fig. 12 is a flowchart of conventional optical information reading apparatus and system.

## DETAILED DESCRIPTION OF THE PREFERRED EMBODIMENTS

Referring now to the drawings, preferred embodiments of the invention are described below.

(Embodiment 1 )

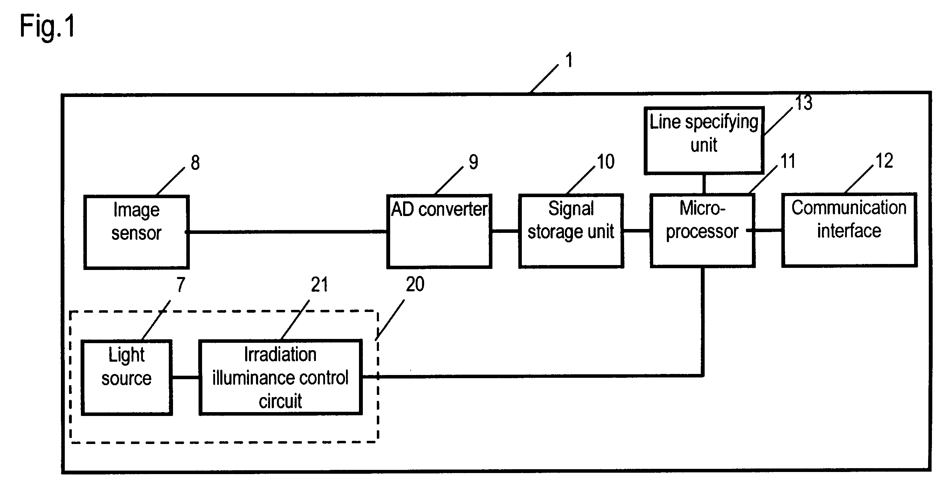

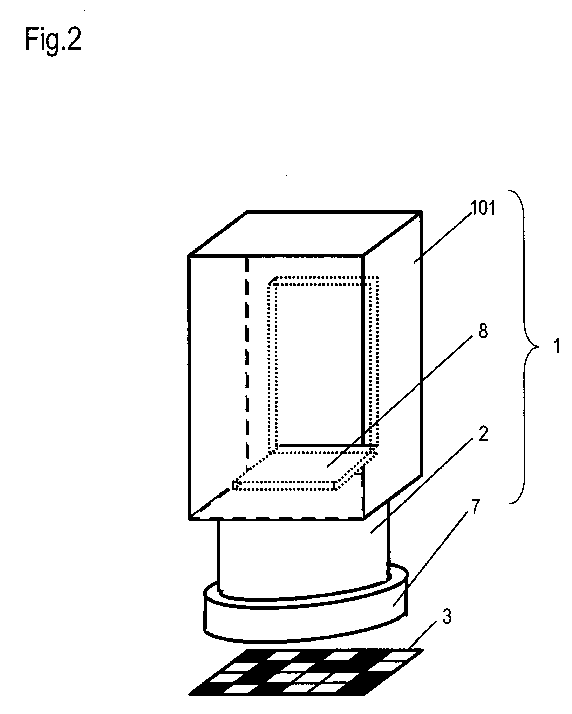

Fig. 1 is a block diagram of a two-dimensional code reader 1 as an optical information reader in embodiment 1 of the invention. Fig. 2 shows its appearance. Herein, the same parts as in Fig. 11 and Fig. 10 showing the appearance and block diagram of the prior art are identified with same reference numerals, and their description is omitted. In Fig. 1, illuminating means 20 enclosed by broken line is composed of a light source 7 and an irradiation illuminance control circuit 21. The irradiation illuminance control circuit 21 is designed to adjust the brightness of the light source 7 by a command from a microprocessor 11. A line specifying unit 13 is to specify the line for picking up one of the digital signals stored in a signal storage unit 10. The microprocessor 11 picks up a signal of at least one line specified by the line specifying unit 13. The microprocessor 11 has a function of decoding the signal digitized by an AD converter 9 into the information possessed by the code symbol. A lens 2 shown in Fig. 2 is to adjust the focus of a code symbol 3 to an image sensor 8.

As shown in Fig. 2, the two-dimensional code reader 1 which is the optical information reader in embodiment 1 of the invention has the section corresponding to the conventional video camera, the section corresponding to the signal processor, and the irradiation illuminance control circuit 21 composed in one case.

In the constitution as shown in Fig. 1, when the irradiation illuminance to the code symbol 3 is dark, the irradiation illuminance is raised automatically, so that an optimum irradiation illuminance may be always obtained for the process of recognition.

The light source 7 is formed as part of the two-dimensional code reader 1 as shown in Fig.2, but it may be also formed separately.

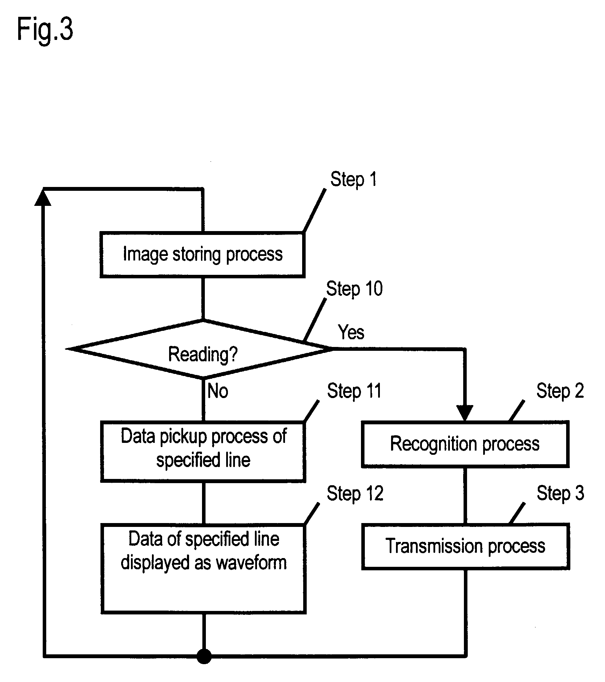

Fig. 3 shows the flow of process of the optical information reader in embodiment 1 of the invention. Herein, the same parts as in Fig. 12 showing the flow of the prior art are identified with same reference numerals.

Step 1: Image storing process

The microprocessor 11 processes to store the output signal from the image sensor 8 into the signal storing means 10 composed of a memory through the AD converter 9.

Step 10: Mode judgement

After storing the signal at step 1, the microprocessor 11 judges whether the mode (operation setting) is ordinary "reading" or "waveform output."

In this mode setting, in this embodiment, the operation is set by a switch (not shown) provided on the main body of the two-dimensional code reader 1, but it may be also set by communication with the host.

Step 2: Recognition process

If the mode is "reading" at step 10, the microprocessor 11 recognizes the digital signal stored in the signal storage unit 10.

Step 3: Transmission to host

The result recognized at step 2 is transmitted by the microprocessor 11 to the host system such as POS or PC as the image.

The microprocessor 11 also decodes the recognized result into the information possessed by the code symbol, and sends the result to the host such as POS or PC.

Step 11: Data pickup

If the mode is "waveform output" at step 10, the microprocessor 11 picks up the data of the specified line.

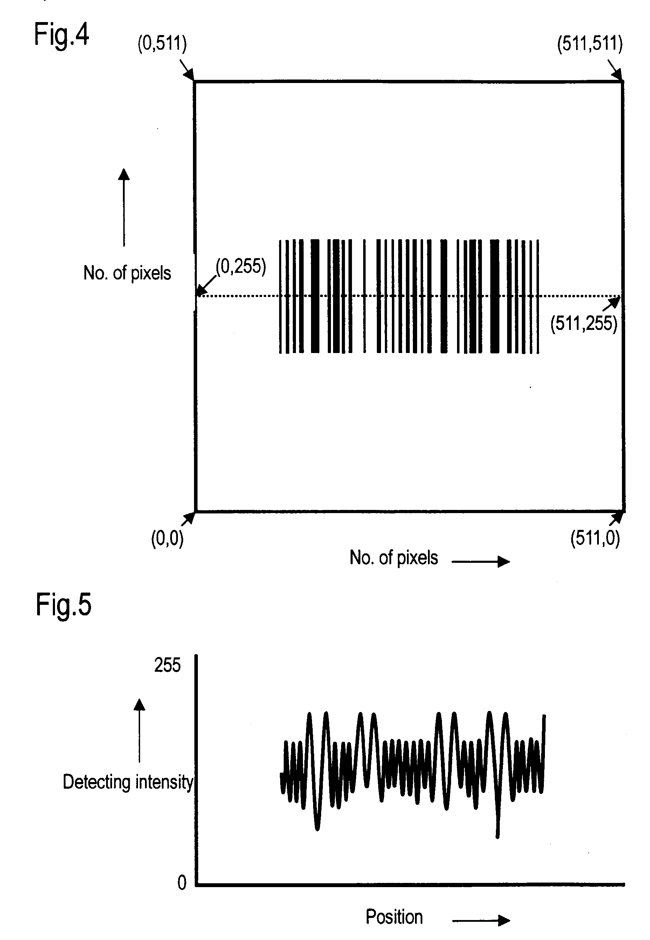

For example, as shown in Fig. 4, supposing the image size to be 512 lines in the horizontal (X) direction and 512 lines in the vertical (Y) direction, and expressing the pixel coordinates as (X, Y), to pick up the 256th line (as counted from the first) in the vertical (Y) direction, one line is picked up in the horizontal direction up to (0, 255), (1, 255), ..., (511, 255).

To specify from which line the signal is to be picked up, the specifying means may specify by the switch provided in the circuit board, specify by the communication with the host, or specify the line to be picked up by reading a specific two-dimensional code.

Step 12: Display process

The microprocessor 11 processes the data picked up at step 11 to be displayed in a waveform in the display unit such as CRT or liquid crystal device.

The data processed for display is transmitted to the host such as POS or PC through the communication interface 12, and is displayed.

In this embodiment, the AD converter is one of a type of converting an analog signal into an eight-bit digital signal. Accordingly, the displayed data is displayed by the value of 0 to 255 as the detecting intensity on the axis of ordinates.

The detecting intensity of the digital signal from the barcode as shown in the code symbol 3 in Fig. 4 displayed in waveform is schematically shown in Fig. 5. When one line is picked up in the horizontal direction as in this embodiment, the axis of abscissas denotes the horizontal position of the image.

As explained above, the optical information reader of the invention can display the magnitude of electric signal (detecting intensity) photoelectrically converted by the image sensor 8 of the specified line accurately in waveform.

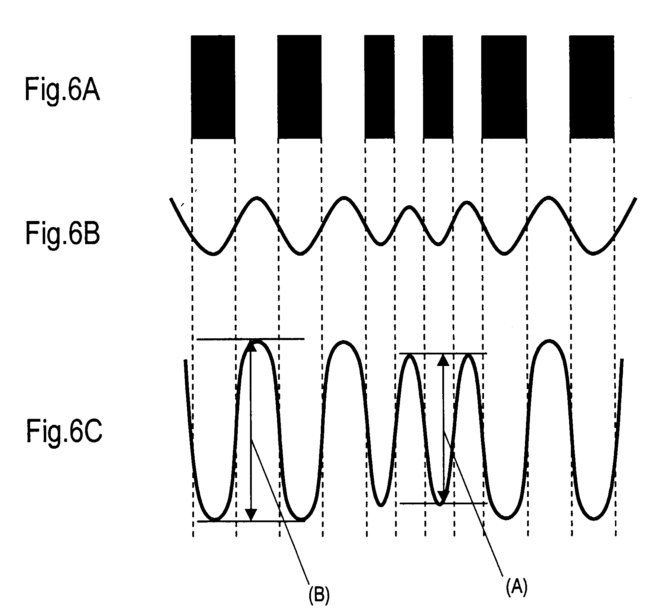

Or, in the case of the code symbol 3 composed of a plurality of black and white thick and thin lines as shown in Fig. 6A, while displaying the detecting intensity of the image, the focus can be adjusted so that the amplitude (A) of the detecting intensity of the thin line may be maximum. Fig. 6B is a waveform diagram schematically showing the state of viewing the thin lines and thick lines of the code symbol, with the focus not adjusted. Fig. 6C is a waveform diagram schematically showing the state of viewing the thin lines and thick lines of the code symbol, with the focus adjusted. That is, this adjustment can be done easily and accurately by anyone. In the manufacturing process, meanwhile, since the ambient brightness varies with the environments, only by defining the amplitude (A) of the detecting intensity of the thin line, it may be difficult to define the amplitude (A) of the detecting intensity of the thin line satisfactory within a certain range. If the ambient brightness varies, by using the amplitude (B) of the detecting intensity of the thick line and the amplitude (A) of the detecting intensity of the thin line, it may be defined easily by the exponent expressed in the following formula.

(Amplitude of detecting intensity of thin line) / (amplitude of detecting intensity of thick line) = (A) / (B)

The larger the value, the better the focus is adjusted.

(Embodiment 2)

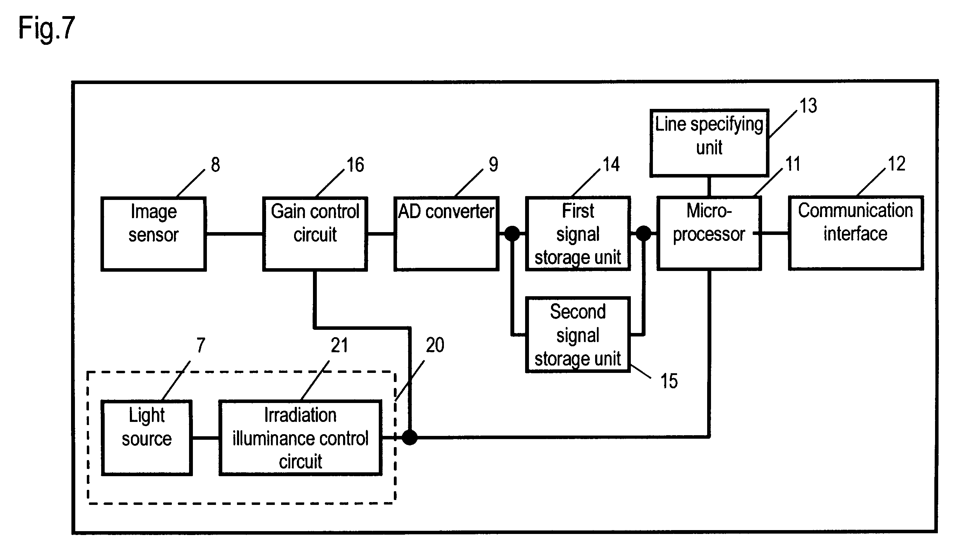

Fig. 7 is a block diagram of a two-dimensional code reader 1 which is an optical information reader in embodiment 2 of the invention. Herein, the same parts as in Fig. 1 showing a block diagram of embodiment 1 are identified with same reference numerals, and their description is omitted. When installing the apparatus or system, first signal storing means 14 stores the output signal from an image sensor 8 digitized by an AD converter 9 as a reference signal. Herein, the first signal storing means 14 is composed of a nonvolatile memory such as EEPROM or a memory supported by a battery, so that the stored data may not be lost if the power is cut off. Second signal storing means 15 is used in the recognition process at the time of ordinary reading. The gain control means 16 controls the gain of the output of the image sensor 8 according to the instruction from the microprocessor 11. The microprocessor 11, on the other hand, by the offset of the code symbol position, controls the contrast of the waveform showing the image. Further, the gain control means 16 and/or microprocessor 11 controls the detecting intensity by an electronic shutter which controls the CCD accumulated electric charge for composing the image sensor 8.

At the time of adjustment, the digital signal stored in the first signal storing means 14 and the digital signal stored in the second signal storing means 15 are compared by the microprocessor 11, and gain control means 16 or irradiation illuminance control circuit 21 is controlled by the microprocessor 11 so that the amplitude (A) of the detecting intensity of the thin lines or the amplitude (B) of the detecting intensity of the thick lines may be equal at the time of installation and at the time of adjustment, in the case of the image of the code symbol 3 composed of a plurality of black and white thin lines and thick lines as shown in Fig. 5.

In such constitution, if the light source 7 is darker due to deterioration as compared with the level at the time of installation, the irradiation illuminance is intensified and/or the gain control is raised, so that the reading condition including the optimum irradiation illuminance may be obtained for recognition process.

(Embodiment 3)

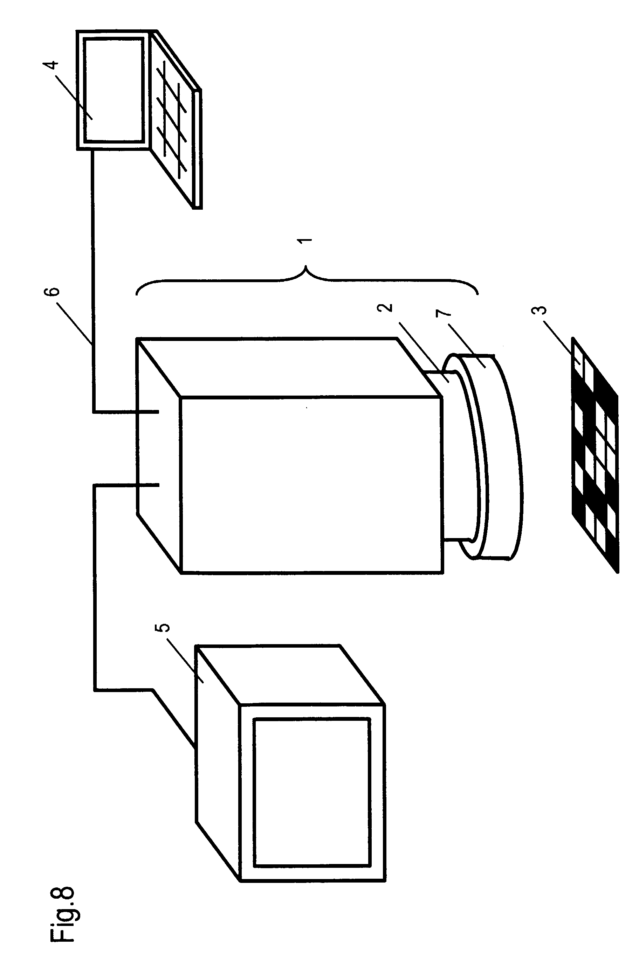

Embodiment 3 relates to an optical information reading system employing the optical information reader in embodiments 1 and 2. A structural diagram of embodiment 3 is shown in Fig. 8.

The optical information reading system of embodiment 3 is composed of:

a) a two-dimensional code reader 1 which is an optical information reader,
b) an external control device 4 which is generally a POS or computer,
c) display means 5 such as CRT or liquid crystal display device, and
d) a communication line 6 for making various communication settings or reading settings between the optical information reader or two-dimensional code reader 1 and the external control device 4.

The LED and buzzer for showing the reading result are not shown, but they may be either provided or not.

In the embodiment, the display means 5 is provided aside from the external control device 4, but the display unit furnished to the external control device 4 may be used instead.

Alternatively, the image of the code symbol 3 may be displayed in the display means 5, and the waveform output may be displayed in the display unit of the external control device 4.

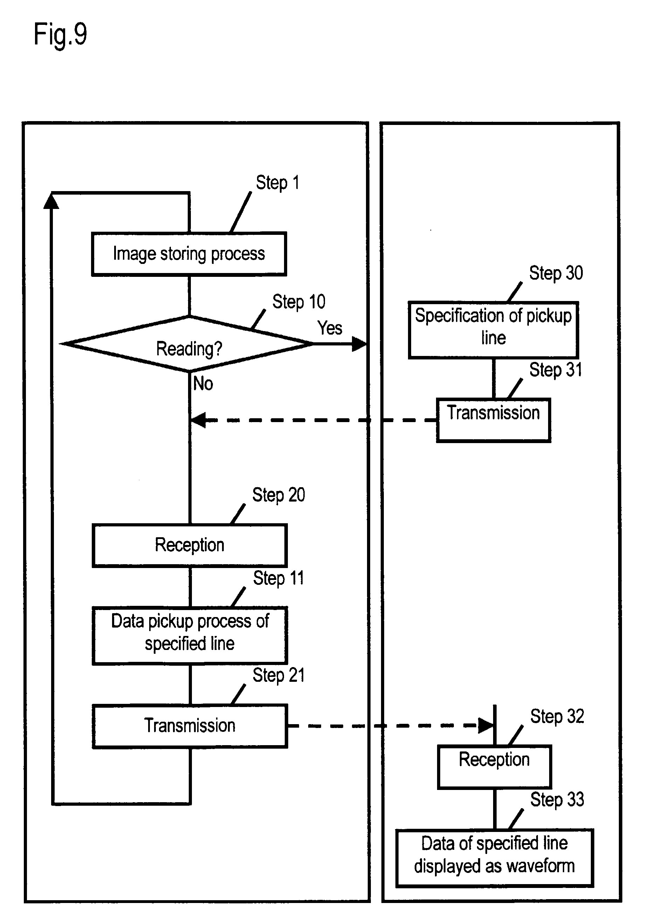

Fig. 9 shows the flow of process of the optical information reading system of embodiment 3 of the invention. Herein, the same parts as in Fig. 3 showing the flow of the embodiment 1 are identified with same reference numerals.

Step 1: Image storing process

The microprocessor 11 requests to store the output signal from the image sensor 8 into the signal storing means 10 composed of a memory through the AD converter 9.

Step 10: Mode judgement

After storing the signal at step 1, the microprocessor 11 judges whether the mode (operation setting) is ordinary "reading" or "waveform output."

Step 30: Signal pickup specification

If the mode is "reading" at step 10, the microprocessor 11 specifies to pick up the signal from which line.

Step 31: Transmission

The data showing the line specified at step 30 is transmitted by communication from the external control device 4 to the two-dimensional code reader 1.

Step 20: Reception

The two-dimensional code reader 1 receives the data showing the specified line from the external control device 4.

Step 11: Data pickup

The data showing the detecting intensity of the specified line is picked up.

Step 21: Transmission

The data of the picked-up line is transmitted by communication to the external control device 4.

Step 32: Reception

At the external control device 4, the data of the picked-up line is received.

Step 33: Display

The received data is displayed as waveform.

At step 10, if the mode is "reading" (Yes), the processing is same as in embodiment 1 shown in Fig. 3, and its illustration and explanation are omitted.

Thus, in the line specified by the external control device 4, the magnitude of the electric signal (detecting intensity) photoelectrically converted by the image sensor 8 can be accurately displayed in the external control device 4.

As clear from the description above, since the signal of at least one specified line can be picked up from the digital signals stored in the signal storing means, a desired line (for example, upper part, middle part, etc.) in the viewing field of the image sensor requested by the user can be selected, and the picked-up signal can be processed.

Since the picked-up signal can be transformed into an image and shown in the display, it is easier to judge visually for the user.

By displaying the detecting intensity in waveform, the quantity of light received by the image sensor can be adjusted accurately, so that it is easier to judge visually for the user.

Since an arbitrary line can be selected either in the lateral direction or in the vertical direction, it is regardless of direction of the code symbol.

A desired arbitrary line can be selected from the external control device disposed at a place remote from the signal pickup means.

The signal of a specified line can be transmitted to the external control device disposed at a place remote from the signal pickup means. As a result, the signal can be analyzed also in the external control device.

The picked-up line can be displayed in the display unit also in the external control device disposed at a place remote from the signal pickup means.

By using the light source capable of adjusting the detecting intensity information, an optimum irradiation illuminance is obtained for automatic recognition process.

Being free from effects of deterioration of light source or external light in a long course of time after installation, the reading condition including the optimum irradiation illuminance adjusted at the time of installation can be obtained.

The invention is not limited to the two-dimensional code reader or the system using the same, but may be applied also in the one-dimensional barcode reader, OCR reader, hand-held terminal, or other portable information terminal for reading the information optically, and the system using the same.

## Claims

1. An optical information reader comprising:

   an image sensor for taking in a reflected light from a code symbol and its periphery and converting into an electric signal,
   an AD converter for converting the electric signal from said image sensor into a digital signal,
   decoding means for decoding the signal digitized from the electric signal from said image sensor in order to restore the information possessed by said code symbol,
   signal storing means for storing the signal digitized from the electric signal from said image sensor, and
   signal pickup means for picking up the signal of at least one specified line out of the digital signals stored in said signal storing means.

2. The optical information reader of claim 1, which is accommodated in one case.

3. The optical information reader of claim 1, wherein the signal picked up from the signal pickup means is transformed into an image and is displayed in the display unit.

4. An optical information reading system comprising:

   an image sensor for taking in a reflected light from a code symbol and its periphery and converting into an electric signal,
   an AD converter for converting the electric signal from said image sensor into a digital signal,
   decoding means for decoding the signal digitized from the electric signal from said image sensor in order to restore the information possessed by said code symbol,
   signal storing means for storing the signal digitized from the electric signal from said image sensor, and
   signal pickup means for picking up the signal of at least one specified line out of the digital signals stored in said signal storing means,
   wherein each signal of said digital signals is related to the detecting intensity information, and the detecting intensity related to each signal is displayed as waveform.

5. The optical information reading system of claim 1, further comprising specifying means for specifying at least one arbitrary line in the nearly lateral direction and/or vertical direction out of the digital signals stored in the signal storing means.

6. An optical information reading system comprising:

   an image sensor for taking in a reflected light from a code symbol and its periphery and converting into an electric signal,
   an AD converter for converting the electric signal from said image sensor into a digital signal,
   decoding means for decoding the signal digitized from the electric signal from said image sensor in order to restore the information possessed by said code symbol,

signal storing means for storing the signal digitized from the electric signal from said image sensor, and signal pickup means for picking up the signal of at least one specified line out of the digital signals stored in said signal storing means,

wherein said signal pickup means and an external control device are connected through a communication line, said external control device includes specifying means for specifying at least one arbitrary line in the nearly lateral direction and/or vertical direction out of the digital signals stored in said signal storing means, and the position information specified by said specifying means is transmitted to said signal pickup means through said communication line.

7. The optical information reading system of claim 6, wherein the signal of at least one line specified by the position information is transmitted to the external control device.

8. The optical information reading system of claim 7, wherein the detecting intensity information about the data of at least one arbitrary line being picked up is displayed in the display unit.

9. The optical information reading system of claim 4, further comprising illuminating means and/or gain control means for adjusting the detecting intensity information related to the digitized signal.

10. An optical information reading system comprising:

an image sensor for taking in a reflected light from a code symbol and its periphery and converting into an electric signal,
an AD converter for converting the electric signal from said image sensor into a digital signal,
decoding means for decoding the signal digitized from the electric signal from said image sensor in order to restore the information possessed by said code symbol, and
a plurality of signal storing means for storing the signal digitized from the electric signal from said image sensor,
wherein said plurality of signal storing means includes first signal storing means for storing a digital signal as reference, and second signal storing means for storing the signal digitized at the time of reading, further comprising:
illuminating means and/or gain control means for adjusting the detecting intensity information related to the signal digitized depending on the result of comparison by comparing the signal stored in the first signal storing means and the digital signal stored in the second signal storing means.

11. The optical information reading system of claim 10, wherein the gain control means is composed of electronic shutter control and/or offset control and/or gain control.

# Fig.1

EP 1 026 619 A2

# Fig.2

# Fig.3

```
                                              Step 1
          ┌─────────────────────────────────────┐
          │                                      │
          │    ┌──────────────────────────┐      │
          │    │   Image storing process  │      │
          │    └──────────────────────────┘      │
          │                 │          Step 10    │
          │                 │          Yes        │
          │          ╱──────┴──────╲              │
          │         ╱               ╲   Yes       │
          │        ╱    Reading?      ╲──────────┐│
          │         ╲               ╱            ││
          │          ╲──────┬──────╱             ││
          │               No │    Step 11        ││  Step 2
          │    ┌──────────────────────────┐      ┌──────────────────────────┐
          │    │  Data pickup process of  │      │   Recognition process    │
          │    │     specified line       │      └──────────────────────────┘
          │    └──────────────────────────┘               │    Step 3
          │            Step 12                    ┌──────────────────────────┐
          │    ┌──────────────────────────┐      │  Transmission process    │
          │    │   Data of specified line │      └──────────────────────────┘
          │    │   displayed as waveform  │               │
          │    └──────────────────────────┘               │
          │                 │                              │
          └─────────────────●──────────────────────────────┘
```

Fig.4

(0,511)                  (511,511)

No. of pixels   (0,255)

(511,255)

(0,0)               (511,0)

No. of pixels ⟶

Fig.5

255

Detecting intensity

0

Position ⟶

Fig.6A

Fig.6B

Fig.6C

(B)

(A)

Fig.7

Fig.8

# Fig.9

## Fig.10

EP 1 026 619 A2

Fig.11

EP 1 026 619 A2

Fig.12

Step 1

Image storing process

Step 2

Recognition process

Step 3

Transmission process